# EUROPÄISCHE PATENTSCHRIFT

(11) **EP 1 269 815 B1**
(45) Veröffentlichungstag und Bekanntmachung des Hinweises auf die Patenterteilung: **26.03.2008**
(21) Anmeldenummer: 02013395.5
(22) Anmeldetag: 19.06.2002
(51) Int. Cl.: A01B 45/02

(54) **Vorrichtung zur Begasung von Rasenflächen**
Device for applying gas to lawn
Dispositif pour appliquer du gaz sur un gazon

(30) Priorität: 20.06.2001 DE 10129355
(43) Veröffentlichungstag der Anmeldung: 02.01.2003
(73) Patentinhaber: Gemmel, Gerd, 49661 Cloppenburg (DE); Gemmel, Olaf, 49692 Sevelten (DE)
(72) Erfinder: Gemmel, Gerd, 49661 Cloppenburg (DE); Gemmel, Olaf, 49692 Sevelten (DE)
(74) Vertreter: Patentanwälte Thömen & Körner

(56) Entgegenhaltungen:
- WO-A-92/06585
- DE-A- 3 302 341
- DE-A- 3 605 042
- US-A- 3 099 898
- US-A- 6 108 967

## Beschreibung

Die Erfindung betrifft eine Vorrichtung zur Begasung von Rasenflächen nach Anspruch 1. Eine Begasungsvorrichtung ist aus WO 92/06585 bekannt.

Rasenflächen, welche nur noch bedingt ihren natürlichen Wachstumsbedingungen ausgesetzt sind, befinden sich insbesondere in Fußballstadien neuerer Bauart, bei denen die Rasenflächen derart umbaut sind, dass das natürliche Wachstum des Rasens nicht mehr gewährleistet ist.

Es ist bekannt, dass solche Rasenflächen zu wenig Luft und Licht erhalten und daher verkümmern.

Folglich müssen die Rasenflächen in regelmäßigen Abständen komplett ausgetauscht werden, wobei ein solcher Austausch sehr aufwendig und kostenintensiv ist. Auf außerhalb des Stadions angeordneten Feldern wachsen zu diesem Zweck ständig Ersatzrasenflächen, die in meterbreite Bahnen geschnitten und mitsamt Erde und Wurzelwerk wie ein Teppich aufgerollt und im Stadion verlegt werden. Es hat sich als Nachteil herausgestellt, das die ausgetauschten Rasenflächen nach dem Verlegen eine bestimmte Zeit benötigen, um wieder auf dem Untergrund anzuwachsen. In dieser Zeit ist die Rasenfläche nicht nutzbar.

Diese Probleme sind bei verschiedenen Stadien aufgetreten, insbesondere aber im Dortmunder Westfalenstadion, im Mailänder Meazza-Stadion oder in der Amsterdam Arena.

Im Mailänder Meazza-Stadion wird bereits seit einem Jahrzehnt vergeblich nach einer Lösung gesucht. Auch die in Amsterdam von einer speziellen Kommission getroffenen Maßnahmen zeigten bisher nicht die erhoffte Wirkung.

Es ist bekannt, das Problem der unzureichenden Belüftung dadurch zu lösen, dass die Rasenfläche komplett mit Rasenheizung und Bewässerungsanlage auf einer hydraulischen Hebebühne angepflanzt wird, die in eine Höhe von über 50 Meter gefahren werden kann, in der genügend Luft und Sonne für das Wachstum des Rasens zur Verfügung steht.

Nachteilig an dieser Lösung ist der immense Kostenaufwand für die Nachrüstung der eingangs genannten Stadien. Ein weiterer Nachteil dieses Verfahrens besteht darin, das ein Hubvorgang mehrere Stunden dauern kann und hohe Energiekosten verursacht.

Es ist weiterhin bekannt, das Problem der unzureichenden Belüftung dadurch zu lösen, dass die Rasenfläche komplett mit Rasenheizung und Bewässerungsanlage aus dem Stadion gefahren wird. Dazu liegt die Rasenfläche in einer Art Trog aus Stahlbeton, der nur zu den Veranstaltungen ins Innere des Stadions eingeschoben wird. Ansonsten liegt die Rasenfläche außerhalb des Stadions und ist dort den natürlichen Witterungsbedingungen ausgesetzt. Licht, Luft und Wasser können so ungehindert die Rasenfläche erreichen.

Nachteilig an diesem Verfahren ist, dass sich die Stadien der eingangs genannten Art nur durch größere Umbaumaßnahmen und nur mit einem erheblichen Kostenaufwand nachrüsten lassen.

Ausgehend von diesem Stand der Technik liegt der Erfindung die Aufgabe zugrunde, eine vereinfachte Vorrichtung zum Begasen von Rasenflächen der eingangs genannten Art zur Verfügung zu stellen, die ohne wesentlichen Umbauaufwand bei allen Stadien eingesetzt werden kann.

Diese Aufgabe wird bei einer Vorrichtung zur Begasung von Rasenflächen durch die Merkmale des Anspruchs 1 gelöst.

Bei dieser Ausgestaltung wird das Gas durch den Gaskanal geleitet und gelangt zu den auf die Rasenfläche gerichteten Austrittsöffnungen. Der gesamte Gasstrom wird so großflächig entlang des Gaskanals auf die unter dem Gaskanal befindliche Rasenfläche verteilt und umspült die Rasenfläche. Dadurch werden auf überraschend einfache Art die Bedingungen für ein natürliches Wachstum des Rasens hergestellt.

Der Gaskanal besteht aus einem Folienschlauch, in den als Austrittsöffnungen dienende Löcher eingestanzt sind.

Durch die Ausbildung des Gaskanals als Folienschlauch kann der Gaskanal im zusammengelegten Zustand und damit raumsparend transportiert und gelagert werden. Durch den Gasdruck entfaltet er sich selbständig und bläht sich anschließend auf seinen maximalen Querschnitt auf. Dabei erhält er auch ohne zusätzliche Stützmittel bereits eine hohe Stabilität und bietet für das durchströmende Gas einen minimalen Strömungswiderstand.

Gemäß einer Weiterbildung besteht der Folienschlauch aus einer reißfesten, recyclebaren Polyethylenfolie.

Hierbei handelt es sich um ein besonders leichtes, stabiles und umweltverträgliches Material. Durch das geringe Gewicht werden nur sehr einfache und ebenfalls leichte Hilfsmittel zu Fixierung benötigt. Dabei lässt sich auch der Auftrieb effektiv nutzen, der durch den Rückstoß des Gases aus den Austrittsöffnungen auf den Folienschlauch ausgeübt wird. Dieser Rückstoß kann etwa den Wert des Eigengewichts des Folien-schlauches erreichen. Da der Rückstoß bei Annäherung an die Rasenfläche zunimmt, ergibt sich eine Abstandsregelung, die den Gaskanal bei vorgegebenem Gasdruck auf einem gleichmäßigen Abstand von der Rasenfläche hält.

Der als Folienschlauch ausgebildete Gaskanal kann an wenigstens einem über die Rasenfläche gespannten Seil befestigt sein.

Aufgrund des geringen Gewichts des Folienschlauches ist eine Befestigung an einem Seil möglich, ohne dass das in der Mitte des Seils zwischen den Einspannenden angreifende Gewicht des Folienschlauches zu einer übermäßigen Seilspannung führt. Dadurch kann auf sonstige Stützen auf der Rasenfläche selbst verzichtet werden. Außerdem wird vermieden, dass sich der Folienschlauch im drucklosen Zustand auf die Rasenfläche legt und so Teile davon abdeckt.

Vorzugsweise nimmt die Öffnungsweite der Austrittsöffnungen und/oder die Anzahl der der Austrittsöffnungen pro Flächeneinheit über die Länge des Gaskanals vom offenen Ende zum geschlossenen Ende zu, derart dass über die Länge des Gaskanals ein gleichmäßiger Gaseintrag stattfindet.

Da der Druck innerhalb des Gaskanals aufgrund des Strömungswiderstandes und des aus den Austrittsöffnungen längs des Gaskanals austretenden Gases abnimmt, würde der austretende Gasstrom am Ende des Gaskanals geringer sein als am Anfang. Durch die angegebene Bemessung der Öffnungsweite und /oder der Austrittsöffnungen wird dieser Effekt ausgeglichen und über die Länge des Gaskanals ein gleichmäßiger Gaseintrag erzielt.

Ferner kann bei einem konvex gekrümmten Querschnittsverlauf der Unterseite des Gaskanals die Öffnungsweite der Austrittsöffnungen und/oder die Anzahl der der Austrittsöffnungen pro Flächeneinheit von der Mitte aus zu den Seiten zunehmen, derart, dass in Querrichtung des Gaskanals bei vorgegebenem Abstand zur Rasenfläche ein gleichmäßiger Gaseintrag stattfindet.

Da die an den Seiten angeordneten Austrittsöffnungen, einerseits einen größeren Abstand von der Rasenfläche haben als die in der Mitte angeordneten Austrittsöffnungen und andererseits einen schräg gerichteten Gasstrom ausstoßen, würden die seitlich des Gaskanals gelegenen Bereich der Rasenfläche einen geringeren Gaseintrag erhalten als der mittlere Bereich. Durch die angegebene Bemessung der Öffnungsweite und /oder der Austrittsöffnungen wird dieser Effekt ausgeglichen und auch über die Breite des Gaskanals ein gleichmäßiger Gaseintrag erzielt.

Gemäß einer Weiterbildung können mehrere Gaskanäle parallel angeordnet sein und ihr gegenseitiger Abstand so bemessen ist, dass in Querrichtung ein gleichmäßiger Gaseintrag stattfindet.

Trotz Verwendung einzelner beabstandeter Gaskanäle kann so ein flächenmäßig konstanter Gaseintrag erzielt werden.

Alternativ können der Gaskanal oder mehrere Gaskanäle in Querrichtung und/oder in Längsrichtung verfahrbar sein.

Dadurch lässt sich bei reduziertem Aufwand an Gaskanälen und Druckaggregaten ebenfalls flächenmäßig konstanter Gaseintrag erzielen.

Vorzugsweise wird mittels des Druckaggregates ein Gasgemisch zugeführt, das außer Luft zusätzliche Anteile von Wasserdampf und/oder Kohlendioxid und/oder Dünger umfasst.

Durch das Anreichern des Gases oder Gasgemisch mit Wasser wird erreicht, dass einer übermäßigen Verdunstung von Wasser auf der Rasenfläche entgegengewirkt wird. Die Anreichern des Gases oder Gasgemisch mit Kohlendioxid hat direkten Einfluss auf die Photosyntheseleistung der Rasenfläche und wirkt sich somit positiv auf das Wachstum der Rasenfläche aus. Ähnliches gilt auch für Dünger, der so ebenfalls gleichmäßig und in der Menge dosierbar in die Rasenfläche eingebracht werden kann.

Weiterhin kann das Druckaggregat eine Heizvorrichtung umfassen.

Hierdurch lässt sich eine zu feuchte Rasenfläche trocknen, da erwärmtes Gas mehr Wasseranteile aufnehmen kann als kaltes Gas. Außerdem lässt sich die Rasenfläche schnee- und eisfrei halten. Auf aufwendige Rasenheizungen kann somit verzichtet werden. Wird als Heizvorrichtung ein Öl- oder Gasbrenner eingesetzt, kann ein erhöhter Kohlendioxidanteil und auch ein erhöhter Stickstoffanteil als Dünger aus dem Verbrennungsgas bezogen werden.

Gemäß einer Weiterbildung sind Sensoren vorgesehen, welche eine oder mehrere Messgrößen, wie Umgebungstemperatur, Umgebungsluftfeuchte, Rasentemperatur, Rasenfeuchte, Gaseintrittstemperatur, Gasaustrittstemperatur, Entrittsgasfeuchte, Austrittsgasfeuchte, Kohlendioxidanteil, Düngeranteil erfassen und zu einem Regel- und Steuergerät übertragen, mit dem das Druckaggregat und/oder die Zuführung von Wasserdampf und/oder Kohlendioxid und/oder Dünger und/oder die Heizvorrichtung zur Einstellung in Regelung von Vorversuchen ermittelter Betriebsparameter steuerbar ist.

Dadurch kann die Dauer der Begasung, die Temperatur, die Luftfeuchte, der Kohlendioxidanteil und der Düngeranteil des Gases oder Gasgemisches derart geregelt werden, dass der Rasen optimal wächst. Somit können die optimalen Wachstumsbedingungen für den Rasen jederzeit sichergestellt werden.

Nachfolgend wird die Erfindung anhand von Ausführungsbeispielen erläutert, die in der Zeichnung dargestellt sind.

Darin zeigen:
- Fig. 1: eine stationäre Vorrichtung zur Begasung von Rasenflächen mit direktem Eintrag von Verbrennungsgasen,
- Fig. 2: eine stationäre Vorrichtung zur Begasung von Rasenflächen mit indirektem Eintrag von Verbrennungsgasen,
- Fig. 3: einen Querschnitt durch die Vorrichtung nach Fig. 1 oder 2,
- Fig. 4: eine mobile Vorrichtung zur Begasung von Rasenflächen mit indirektem Eintrag von Verbrennungsgasen und
- Fig. 5: eine Draufsicht auf eine Rasenfläche mit einer mobilen Vorrichtung zur Begasung.

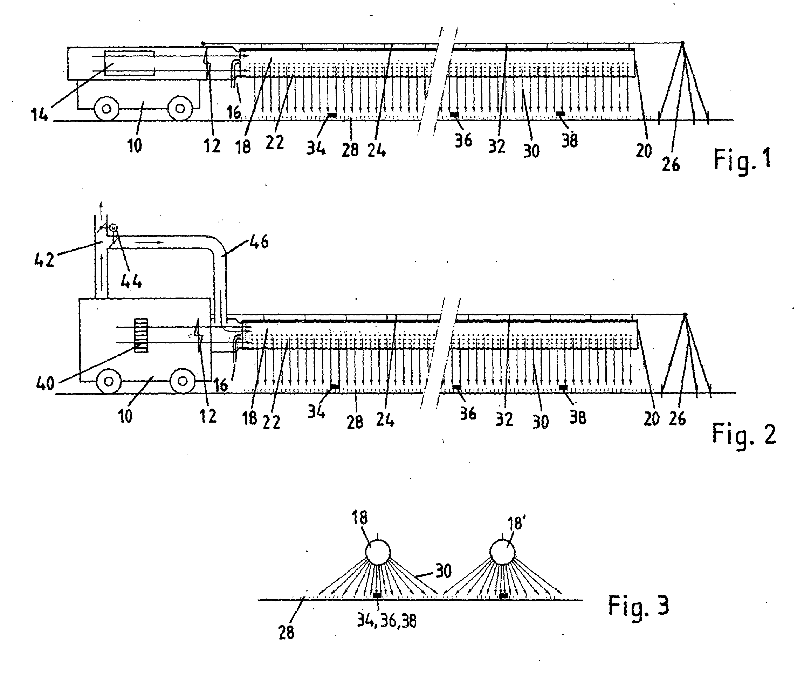

Fig. 1 zeigt eine stationäre Vorrichtung zur Begasung von Rasenflächen mit direktem Eintrag von Verbrennungsgasen. Die Vorrichtung umfasst ein Druckaggregat 10 mit einem Ventilator 12 und einem angeschlossenen Gaskanal 18, der sich quer über eine Rasenfläche 28 erstreckt. Am freien Ende ist der Gaskanal 18 durch einen Verschluss 20 verschlossen. Der Gaskanal 18 ist mittels Haken 32 an einem Seil 24 angehängt, das einerseits am Druckaggregat 10 und andererseits an einem Traggerüst 26 befestigt ist. Der als Folienschlauch ausgebildete Gaskanal 18 weist Austrittsöffnungen 22 auf, die zur Rasenfläche 28 weisen. Aus den Austrittsöffnungen tritt ein Gasstrom 30 aus, der gegen die Rasenfläche 28 gerichtet ist. Das Druckaggregat 10 umfasst ferner eine Brennkammer 14, die mit Öl oder Gas betrieben wird und das Abgas direkt in den Gaskanal 18 zum Eintrag in die Rasenfläche 28 fördert. Ferner ist noch ein Wasserinjektor 18 zum optionalen Eintrag von Wasser oder Dünger vorhanden, der am Ausgang des Druckaggregats 10 angeordnet ist.

Die in dem Gaskanal 18 angeordneten Austrittsöffnungen 22 nehmen in ihrer Öffnungsweite und/oder ihrer Anzahl pro Flächeneinheit über die Länge des Gaskanals 18 vom offenen Ende, also hier dem linken, mit dem Druckaggregat 10 verbundenen Ende, zum geschlossenen Ende, also dem rechten, mit dem Verschluss 20 verschlossenen Ende, zu. Dadurch wird trotz des von links nach rechts abnehmenden Druckes ein gleichmäßiger Gaseintrag in die Rasenfläche 28 erzielt.

Nahe der Rasenfläche 28 befinden sich Sensoren, und zwar hier beispielhaft ein CO₂-Sensor 34, ein Temperatursensor 36 und ein Feuchtesensor 38. Mittels dieser Sensoren können über ein nicht dargestelltes Regel- und Steuergerät die Betriebsbedingungen des Druckaggregats 10 beeinflusst werden, so dass die gewünschten klimatischen Verhältnisse auf der Rasenfläche 28 gezielt eingestellt werden können.

Fig. 2 zeigt eine stationäre Vorrichtung zur Begasung von Rasenflächen mit indirektem Eintrag von Verbrennungsgasen. Das Druckaggregat umfasst hier eine Brennkammer, die Wärme über einen Wärmetauscher 40 an das in den Gaskanal 18 überführte Gas abgibt. Abgase der Brennkammer werden über ein Abgasrohr 42 ins Freie geführt. Über eine Mischerklappe 44 kann ein Abgasanteil durch ein Bypassrohr 46 dem in den Gaskanal überführten Gas beigemischt werden. In den weiteren Merkmalen entspricht die Vorrichtung jedoch der in Fig. 1 dargestellten.

Fig. 3 zeigt einen Querschnitt durch Gaskanäle 18 und 18' der Vorrichtung nach Fig. 1 oder 2. Dabei sind beispielhaft zwei Gaskanäle 18 und 18' in einem solchen Abstand angeordnet, dass die darunter liegende Rasenfläche 28 lückenlos mit einem Gasstrom 30 versorgt wird. Die Gaskanäle 18 und 18' haben eine kreisförmige Querschnittsform, und die Austrittsöffnungen sind bezogen auf das Zifferblatt einer Uhr im Bereich zwischen vier Uhr und acht Uhr angeordnet. Dabei nehmen die Öffnungsweite der Austrittsöffnungen und/oder die Anzahl der Austrittsöffnungen pro Flächeneinheit von der Mitte aus zu den Seiten zu. Es wird so bevorzugt zu den Seiten ein größerer Gasstrom als zur Mitte erzielt, so dass sich insgesamt für die darunter liegende Rasenfläche 28 der gleichmäßige Eintrag quer zu den Gaskanälen 18 und 18' ergibt.

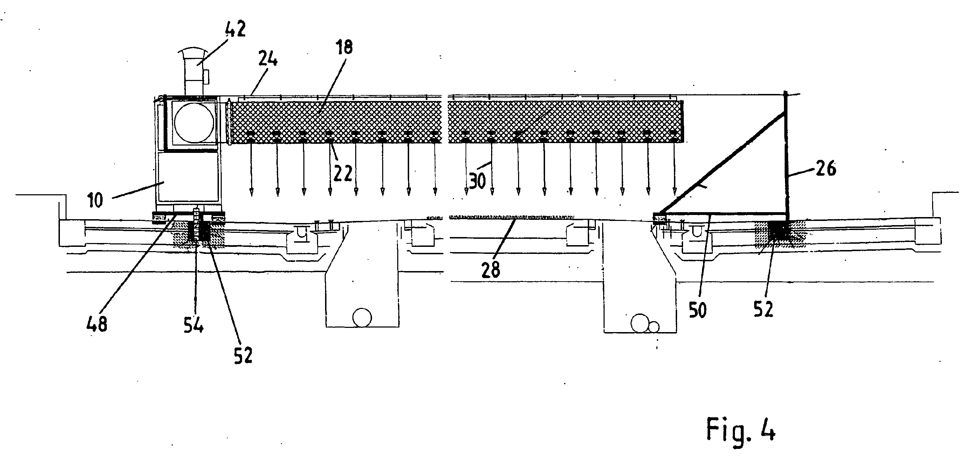

Während die in den Figuren 1, 2 und 3 gezeigte Vorrichtung stationär angeordnete Gaskanäle umfasst, zeigt Fig. 4 eine mobile Vorrichtung zur Begasung von Rasenflächen mit indirektem Eintrag von Verbrennungsgasen. Das Druckaggregat 10 und das auf der gegenüberliegenden Seite der Rasenfläche 28 angeordnete Traggerüst 26 sind in Längsrichtung der Rasenfläche 28, hier also in Richtung der Darstellungsebene, mittels eines Fahrgestells 48 auf Seiten des Druckaggregats 10 und eines Fahrgestells 50 auf Seiten des Traggerüsts 26 verfahrbar. Der Antrieb erfolgt dabei mittels einer Antriebskette 54, die in einem Antriebskanal 52 verläuft. Der Antriebskanal 52 befindet sich hier unter dem Niveau der Rasenfläche 28.

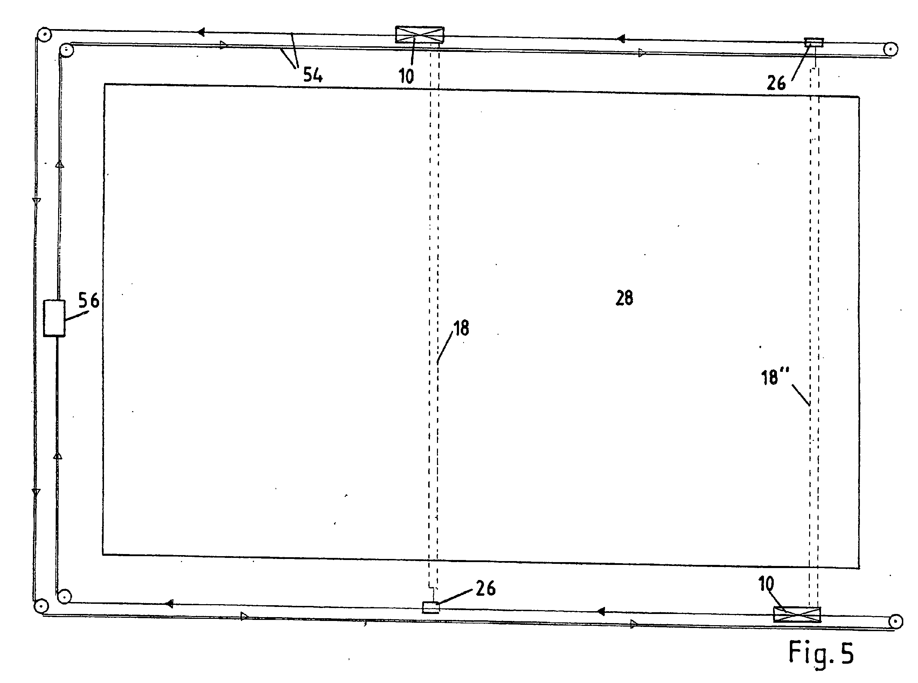

Fig. 5 zeigt schließlich eine Draufsicht auf eine Rasenfläche mit einer mobilen Vorrichtung zur Begasung. Hier sind für die Rasenfläche der Größe eines Fußballfeldes zwei Druckaggregate mit Gaskanälen 18 und 18' angeordnet, wobei entsprechende Traggerüste 26 sich auf der dem jeweiligen Druckaggregat 10 gegenüberliegenden Seite der Rasenfläche 28 befinden. Beide Gaskanäle 18 und 18' sind etwa um die Hälfte der Längsausdehnung der Rasenfläche 28 versetzt. Sowohl die beiden Druckaggregate 10 und 10' als auch die Traggerüste 26 und 26' sind mit der Antriebskette 54 verbunden, die sich über die gesamten beiden Längsseiten und eine Querseite der Rasenfläche 28 erstreckt und durch ein gemeinsames Antriebsaggregat 56 an der Querseite angetrieben wird. Auf diese Weise ist ein exakt synchroner Verfahrweg der Druckaggregate und Traggerüste mit den Gaskanälen gewährleistet.

Bei dieser Ausführung können im Antriebskanal 52 auch elektrische Versorgungsleitungen zum Betrieb des Ventilators 12 und der Brennkammer 14 bzw. des Öl- oder Gasbrenners vorhanden sein. Die Öl- oder Gasversorgung hingegen wird vorteilhaft mit mitgeführten Brennstofftanks vorgenommen.

### Bezugszeichenliste

- 10: Druckaggragat
- 12: Ventilator
- 14: Brennkammer
- 16: Wasserinjektor
- 18: Gaskanal
- 20: Verschluß
- 22: Austrittsöffnungen
- 24: Seil
- 26: Traggerüst
- 28: Rasenfläche
- 30: Gasstrom
- 32: Haken
- 34: CO₂-Sensor
- 36: Temperatursensor
- 38: Feuchtesensor
- 40: Wärmetauscher
- 42: Abgasrohr
- 44: Mischerklappe
- 46: Bypassrohr
- 48: Fahrgestell
- 50: Fahrgestell
- 52: Antriebskanal
- 54: Antriebskette
- 56: Antriebsaggregat

## Patentansprüche

1. Vorrichtung zur Begasung von Rasenflächen durch wenigstens einen sich über wenigstens einen Teil der Rasenfläche (28) erstreckenden Gaskanal (18), der an einem offenen Ende an ein Druckaggregat (10) angeschlossen und am anderen Ende geschlossen ist und in einem der Rasenfläche (28) zugewandten Bereich Austrittsöffnungen (22) aufweist, durch die der Rasenfläche (28) ein Gasstrom (30) zuführbar ist, **dadurch gekennzeichnet, dass** der Gaskanal (18) aus einem Folienschlauch besteht, in den als Austrittsöffnungen (22) dienende Löcher eingestanzt sind.

2. Vorrichtung nach Anspruch 1, **dadurch gekennzeichnet, dass** der Folienschlauch aus einer reißfesten, recyclebaren Polyethylenfolie besteht.

3. Vorrichtung nach einem der Ansprüche 1 oder 2, **dadurch gekennzeichnet, dass** der als Folienschlauch ausgebildete Gaskanal (18) an wenigstens einem über die Rasenfläche (28) gespannten Seil (24) befestigt ist.

4. Vorrichtung nach einem der Ansprüche 1 bis 3, **dadurch gekennzeichnet, dass** die Öffnungsweite der Austrittsöffnungen (22) und/oder die Anzahl der der Austrittsöffnungen (22) pro Flächeneinheit über die Länge des Gaskanals (18) vom offenen Ende zum geschlossenen Ende zunimmt, derart dass über die Länge des Gaskanals (18) ein gleichmäßiger Gaseintrag stattfindet.

5. Vorrichtung nach einem der Ansprüche 1 bis 4, **dadurch gekennzeichnet, dass** bei einem konvex gekrümmten Querschnittsverlauf der Unterseite des Gaskanals (18) die Öffnungsweite der Austrittsöffnungen (22) und/oder die Anzahl der Austrittsöffnungen (22) pro Flächeneinheit von der Mitte aus zu den Seiten zunimmt, derart dass in Querrichtung des Gaskanals (18) bei vorgegebenem Abstand zur Rasenfläche (28) ein gleichmäßiger Gaseintrag stattfindet.

6. Vorrichtung nach Anspruch 5, **dadurch gekennzeichnet, dass** mehrere Gaskanäle (18) parallel angeordnet sind und ihr gegenseitiger Abstand so bemessen ist, dass in Querrichtung ein gleichmäßiger Gaseintrag stattfindet.

7. Vorrichtung nach einem der Ansprüche 1 bis 6, **dadurch gekennzeichnet, dass** der Gaskanal (18) oder mehrere Gaskanäle (18) in Querrichtung und/oder in Längsrichtung verfahrbar sind.

8. Vorrichtung nach einem der Ansprüche 1 bis 7, **dadurch gekennzeichnet, dass** mittels des Druckaggregates (10) ein Gasgemisch zuführbar ist, das außer Luft zusätzliche Anteile von Wasserdampf und/oder Kohlendioxid und/oder Dünger umfasst.

9. Vorrichtung nach einem der Ansprüche 1 bis 8, **dadurch gekennzeichnet, dass** das Druckaggregat (10) eine Heizvorrichtung umfasst.

10. Vorrichtung nach einem der Ansprüche 1 bis 8, **dadurch gekennzeichnet, dass** Sensoren vorgesehen sind, welche eine oder mehrere Messgrößen, wie Umgebungstemperatur, Umgebungsluftfeuchte, Rasentemperatur, Rasenfeuchte, Gaseintrittstemperatur, Gasaustrittstemperatur, Entrittsgasfeuchte, Austrittsgasfeuchte, Kohlendioxidanteil, Düngeranteil erfassen und zu einem Regel- und Steuergerät übertragen, mit dem das Druckaggregat (10) und/oder die Zuführung von Wasserdampf und/oder Kohlendioxid und/oder Dünger und/oder die Heizvorrichtung zur Einstellung in Regelung von Vorversuchen ermittelter Betriebsparameter steuerbar ist.

## Claims

1. Device for applying gas to lawns through at least one gas channel (18) which extends over at least part of the lawn (28) and which is connected to a pressure unit (10) at an open end and is closed at the other end and has exit openings (22) in a region facing the lawn (28), through which exit openings a gas stream (30) can be supplied to the lawn (28), **characterised in that** the gas channel (18) consists of a film tube in which holes which serve as exit openings (22) are punched.

2. Device according to claim 1, **characterised in that** the film tube consists of a tear-resistant, recyclable polyethylene film.

3. Device according to one of claims 1 or 2, **characterised in that** the gas channel (18) designed as a film tube is attached to at least one cable (24) which is stretched over the lawn (28).

4. Device according to one of claims 1 to 3, **characterised in that** the opening width of the exit openings (22) and/or the number of exit openings (22) per unit area increases over the length of the gas channel (18) from the open end to the closed end in such a way that a uniform amount of gas is applied over the length of the gas channel (18).

5. Device according to one of claims 1 to 4, **characterised in that**, in the case of a convexly curved cross-sectional profile of the underside of the gas channel (18), the opening width of the exit openings (22) and/or the number of exit openings (22) per unit area increases from the centre to the sides in such a way that a uniform amount of gas is applied in the transverse direction of the gas channel (18) at a predefined distance from the lawn (28).

6. Device according to claim 5, **characterised in that** a plurality of gas channels (18) are arranged in parallel and their distance from one another is such that a uniform amount of gas is applied in the transverse direction.

7. Device according to one of claims 1 to 6, **characterised in that** the gas channel (18) or the plurality of gas channels (18) can be displaced in the transverse direction and/or in the longitudinal direction.

8. Device according to one of claims 1 to 7, **characterised in that** a gas mixture which comprises, apart from air, additional amounts of water vapour and/or carbon dioxide and/or fertiliser can be supplied by means of the pressure unit (10).

9. Device according to one of claims 1 to 8, **characterised in that** the pressure unit (10) comprises a heating device.

10. Device according to one of claims 1 to 8, **characterised in that** sensors are provided which detect one or more measurement variables, such as ambient temperature, ambient humidity, lawn temperature, lawn moisture content, gas entry temperature, gas discharge temperature, moisture content of entering gas, moisture content of discharged gas, amount of carbon dioxide, amount of fertiliser, and transmit these to a regulation and control unit, by means of which the pressure unit (10) and/or the supply of water vapour and/or carbon dioxide and/or fertiliser and/or the heating device can be controlled in order to set operating parameters defined by preliminary experiments.

## Revendications

1. Dispositif de gazage de surfaces de gazon à l'aide d'un canal de gaz (18) au moins, qui s'étend sur une partie au moins de la surface de gazon (28), canal de gaz (18), dont une extrémité ouverte est raccordée à une unité de pression (10) et dont l'autre extrémité est fermée, dispositif de gazage, qui présente, dans une zone tournée vers la surface de gazon (28), des ouvertures de sortie (22), à travers lesquelles un courant de gaz (30) peut être amené à la surface de gazon (28), **caractérisé en ce que** le canal de gaz (18) est conçu en forme d'un tuyau en feuille, dans lequel sont poinçonnés des trous servant d'ouvertures de sortie (22).

2. Dispositif suivant la revendication 1, **caractérisé en ce que** le tuyau en feuille est réalisé dans une feuille polyéthylène résistante à la déchirure et recyclable.

3. Dispositif suivant une des revendications 1 ou 2, **caractérisé en ce que** le canal de gaz (18), conçu en forme d'un tuyau en feuille, est fixé à une corde (24) au moins, qui est tendue au-dessus de la surface de gazon.

4. Dispositif suivant une des revendications 1 à 3, **caractérisé en ce que** la largeur d'ouverture des ouvertures de sortie (22) et/ou le nombre des ouvertures de sortie (22) par unité de surface s'accroît sur la longueur du canal de gaz (18), depuis l'ouverture ouverte en direction de l'ouverture fermée, de manière qu'un apport uniforme de gaz ait lieu sur toute la longueur du canal de gaz (18).

5. Dispositif suivant une des revendications 1 à 4, **caractérisé en ce que** la largeur d'ouverture des ouvertures de sortie (22) et/ou le nombre des ouvertures de sortie (22) par unité de surface s'accroît depuis le centre en direction des côtés, lorsque la section transversale de la face inférieure du canal de gaz (18) présente un profil courbé convexe, de manière qu'un apport uniforme de gaz ait lieu dans le sens transversal du canal de gaz (18), à un écart prédéterminé de la surface de gazon (28).

6. Dispositif suivant la revendication 5, **caractérisé en ce que** plusieurs canaux à gaz (18) sont disposés de façon parallèle l'un à l'autre et que leur écart réciproque est dimensionné de manière qu'un apport uniforme de gaz ait lieu dans le sens transversal.

7. Dispositif suivant une des revendications 1 à 6, **caractérisé en ce que** le canal de gaz (18) ou plusieurs canaux de gaz (18) sont déplaçables dans le sens transversal et/ou dans le sens longitudinal.

8. Dispositif suivant une des revendications 1 à 7, **caractérisé en ce qu'**un mélange de gaz contenant, non seulement de l'air, mais aussi des parts de vapeur d'eau et/ou de dioxyde de carbone et/ou d'engrais peut être amené au moyen d'une unité de pression (10).

9. Dispositif suivant une des revendications 1 à 8, **caractérisé en ce que** l'unité de pression (10) comprend un dispositif de chauffage.

10. Dispositif suivant une des revendications 1 à 8, **caractérisé en ce que** des capteurs sont prévus, qui captent une ou plusieurs grandeurs de mesure, telles que la température ambiante, l'humidité de l'air ambiant, la température du gazon, l'humidité du gazon, la température d'entrée du gaz, la température de sortie du gaz, l'humidité d'entrée du gaz, l'humidité de sortie du gaz, la part de dioxyde de carbone, la part d'engrais et les transmettent à un appareil de réglage et de commande, à l'aide duquel l'unité de pression (10) et/ou l'apport de vapeur d'eau et/ou de dioxyde de carbone et/ou d'engrais et/ou le dispositif de chauffage peuvent être commandés pour régler des paramètres de service déterminés au cours d'essais préliminaires.
